# EUROPEAN PATENT SPECIFICATION

(11) **EP 3 997 984 B1**
(45) Date of publication and mention of the grant of the patent: **08.05.2024**
(21) Application number: 20837125.2
(22) Date of filing: 03.07.2020
(51) Int. Cl.: A23F 5/24, A23F 5/20, A23F 5/46

(54) **LOW-CAFFEINE COFFEE CONCENTRATE**
KAFFEEKONZENTRAT MIT GERINGEM KOFFEINGEHALT
CONCENTRÉ DE CAFÉ À FAIBLE TENEUR EN CAFÉINE

(30) Priority: 08.07.2019 JP 2019126775
(43) Date of publication of application: 18.05.2022
(73) Proprietor: Suntory Holdings Limited, Osaka 530-8203 (JP)
(72) Inventor: TAKAHASHI, Amane, Kawasaki-shi, Kanagawa 211-0067 (JP); IWAMOTO, Shotaro, Kawasaki-shi, Kanagawa 211-0067 (JP)
(74) Representative: Vossius & Partner Patentanwälte Rechtsanwälte mbB
(86) International application number: PCT/JP2020/026185
(87) International publication number: WO 2021/006205

(56) References cited:
- WO-A1-2011/108631
- WO-A1-2011/108631
- JP-A- 2004 105 003
- JP-A- 2004 105 003
- JP-A- 2015 050 959
- JP-A- 2015 050 959
- JP-A- 2015 096 056
- JP-A- 2015 096 056
- JP-A- 2015 142 565
- JP-A- 2015 142 565
- US-A1- 2018 160 696
- RODRIGUES ET AL: "Application of solid-phase extraction to brewed coffee caffeine and organic acid determination by UV/HPLC", JOURNAL OF FOOD COMPOSITION AND ANALYSIS, ELSEVIER, AMSTERDAM, NL, vol. 20, no. 5, 17 April 2007 (2007-04-17) , pages 440-448, XP022029984, ISSN: 0889-1575, DOI: 10.1016/J.JFCA.2006.08.005
- RODRIGUES, C. I. et al.: "Application of solid- phase extraction to brewed coffee caffeine and organic acid determination by UV/HPLC", Journal of Food Composition and Analysis, vol. 20, 2007, pages 440-448, XP022029984, ISSN: 0889-1575, DOI: 10.1016/j.jfca.2006.08.005

## Description

### TECHNICAL FIELD

The present invention relates to a liquid coffee concentrate, and more particularly to a liquid concentrate of low-caffeine coffee, which is to be diluted with milk to make a latte.

### BACKGROUND ART

A latte (caffè latte) is a coffee drink of Italian origin which is made by mixing espresso and milk. US201415102464 discloses a coffee concentrate composition having excellent taste and flavor balance while having satisfactory sourness, sweetness and richness and less coarseness, comprising (A) chlorogenic acids, (B) total sugar, and (C) caffeine, in which a mass ratio of the component (A) and the component (B), [(B)/(A)], is from 1.2 to 5, and a mass ratio of the component (A) and the component (C), [(C)/(A)], is 0.5 or less, and (F) Brix is 5% or more. In recent years, American style cafeterias have been widespread, and lattes have been popular as a highly palatable beverage in Japan. Further, there have been developed different liquid coffee concentrates for making lattes, which make it possible to easily make at home lattes with a rich taste like those made in cafeterias (e.g., NPLs 1, 2).

Meanwhile, caffeine present in coffee may stimulate the central nervous system, the heart or the digestive system such as stomach and intestines. People with high sensitivity to such stimulation of caffeine or with high health consciousness are more likely to avoid caffeine. Thus, decaffeinated coffee beverages from which caffeine is reduced or removed have been developed and commercialized in the market.

However, since caffeine is one of the main taste ingredients of coffee, the problem is that when caffeine is reduced or removed from coffee, the *kokumi* and bitter tastes characteristic of coffee become less noticeable causing a loss of flavor of coffee. Therefore, there have been proposed different techniques of improving the flavor of decaffeinated coffee. Exemplary techniques of improving the flavor of decaffeinated coffee include, but are not limited to, the following: addition of theanine to decaffeinated coffee (PTL 1); incorporation of ethyl isovalerate in decaffeinated coffee (PTL 2); incorporation of potassium sulfate and/or potassium lactate in decaffeinated coffee (PTL 3); addition of a neutral amino acid such as valine, leucine or isoleucine to a decaffeinated coffee matter (PTL 4); and incorporation of a quercetin glycoside in low-caffeine coffee (PTL 5).

### CITATION LIST

### PATENT LITERATURES

PTL 1: Japanese Unexamined Patent Application Publication No. JP 2004-105003
PTL 2: Japanese Domestic Re-publication of PCT International Publication No. JPWO 2011-108631
PTL 3: Japanese Unexamined Patent Application Publication No. JP 2015-50959
PTL 4: Japanese Unexamined Patent Application Publication No. JP 2009-254307
PTL 5: Japanese Unexamined Patent Application Publication No. JP 2017-143831

### NON PATENT LITERATURES

NPL 1: Suntory Beverage & Food Limited, News Release titled "BOSS Home Espresso Latte Mix", [online], 15 Feb. 2016, [searched on June 28, 2019], internet <URL: https://www.suntory.co.jp/softdrink/news/pr/article/SBF0395.htmL>
NPL 2: The Coca-Cola Company, News Release titled "Georgia European coffee base supervised by Sarutahiko Coffee to be launched nationwide on April 9 (Monday)", [online], 2 Apr. 2018, [searched on June 28, 2019], internet <URL: https://www.cocacola.co.jp/press-center/news-20180402-11>

### SUMMARY OF INVENTION

### TECHNICAL PROBLEM

Liquid coffee concentrates for making lattes are to be used for drinking purpose after dilution with milk. Thus, it is important that beverages prepared with addition of milk should have noticeable richness (*kokumi* taste) and bitterness characteristic of coffee while coffee aroma is not masked. In particular, since liquid concentrates of decaffeinated coffee are low in caffeine as a taste ingredient, the problem is that when such liquid concentrates are diluted with milk, prepared beverages are more likely to lose the inherent aroma of coffee, *i.e.,* rich coffee *kokumi* taste and unique coffee bitterness lingering in the mouth after drinking (hereinafter also referred to as "bitter aftertaste").

An object of the present invention is to provide a liquid concentrate of low-caffeine coffee intended for use to prepare a beverage that has a reduced caffeine content but does not lose the inherent aroma of coffee, especially the rich *kokumi* taste and bitter aftertaste of coffee, and which can make one enjoy an authentic latte aroma.

### SOLUTION TO PROBLEM

The present inventors found that when the contents of caffeine and acetic acid in a liquid concentrate of decaffeinated coffee are adjusted to be within the specified ranges, a beverage prepared by diluting the liquid concentrate with milk can have enhanced coffee tastes and give an authentic latte aroma without losing the inherent aroma of coffee, *i.e.,* the rich *kokumi* taste and the bitter aftertaste of coffee. Thus, the inventors have completed the present invention. This invention is directed, but not limited, to the following.
[1] A liquid concentrate of low-caffeine coffee which is to be diluted by a factor of from 3 to 6 times to yield a beverage suitable for drinking, wherein the liquid concentrate satisfies the following requirements (i) to (iv):
   (i) the liquid concentrate comprises caffeine (A) at a concentration sufficient to yield a diluted beverage having a caffeine concentration of from 0.1 to 10 mg/100 g;
   (ii) the liquid concentrate comprises acetic acid (B) at a concentration sufficient to yield a diluted beverage having an acetic acid concentration of not less than 1 mg/100 g;
   (iii) the liquid concentrate having a concentration ratio of acetic acid (B) and caffeine (A) [(B)/(A)] of from 0.7 to 25;
   (iv) the liquid concentrate comprises a coffee flavor.
[2] The liquid concentrate of low-caffeine coffee as set forth in [1], wherein the liquid concentrate comprises caffeine (A) at a concentration sufficient to yield a diluted beverage having a caffeine concentration of from 0.5 to 6 mg/100 g.
[3] The liquid concentrate of low-caffeine coffee as set forth in [1] or [2], further comprising a coffee extract, wherein the liquid concentrate has a coffee solids concentration of from 5 to 12% by weight.
[4] The liquid concentrate of low-caffeine coffee as set forth in [3], wherein the liquid concentrate has a coffee solids concentration of from 6 to 11% by weight.
[5] The liquid concentrate of low-caffeine coffee as set forth in [3] or [4], further comprising a coffee extract and a coffee flavoring.
[6] The liquid concentrate of low-caffeine coffee as set forth in any one of [3] to [5], wherein the liquid concentrate has a ratio of caffeine concentration to coffee solids concentration (caffeine concentration/coffee solids concentration) of not more than 2 × 10⁻³.
[7] The liquid concentrate of low-caffeine coffee as set forth in [6], wherein the liquid concentrate has a ratio of caffeine concentration to coffee solids concentration (caffeine concentration/coffee solids concentration) of not more than 4 × 10⁻⁴.
[8] The liquid concentrate of low-caffeine coffee as set forth in any one of [1] to [7], wherein the liquid concentrate has a pH of from 5.0 to 7.0.
[9] The liquid concentrate of low-caffeine coffee as set forth in [8], wherein the liquid concentrate has a pH of from 5.3 to 6.0.
[10] The liquid concentrate of low-caffeine coffee as set forth in any one of [1] to [9], wherein the liquid concentrate is intended to be diluted with milk.
[11] A method for preparing a liquid concentrate of low-caffeine coffee which is to be diluted by a factor of from 3 to 6 times to yield a beverage suitable for drinking, the method comprising the steps of:
   (i) adding caffeine (A) at a concentration sufficient to yield a diluted beverage having a caffeine concentration of from 0.1 to 10 mg/100 g;
   (ii) adding acetic acid (B) at a concentration sufficient to yield a diluted beverage having an acetic acid concentration of not less than 1 mg/100 g;
   (iii) adjusting a concentration ratio of acetic acid (B) and caffeine (A) [(B)/(A)] to be within the range from 0.7 to 25; and
   (iv) adding a coffee flavor.

### ADVANTAGEOUS EFFECTS OF INVENTION

By using the liquid concentrate of decaffeinated coffee of the present invention, there can be prepared a beverage which has a reduced caffeine content but can make one enjoy an authentic latte aroma. The liquid concentrate of low-caffeine coffee of this invention is also excellent in convenience since a latte having a low caffeine content but an authentic aroma can be easily prepared by simply mixing the liquid concentrate with milk. Further, the liquid concentrate of low-caffeine coffee of this invention is advantageous in that it can be provided easily and inexpensively without the need for special equipment, since it can be prepared by adjusting caffeine and acetic acid contents to be within the specified ranges.

### BRIEF DESCRIPTION OF DRAWINGS

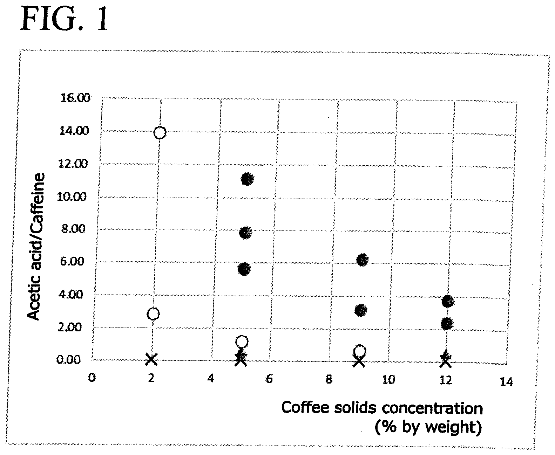

[FIG. 1] FIG. 1 depicts a diagram that summarizes the results of Experiments 4 and 5.

### DESCRIPTION OF EMBODIMENTS

### (Liquid coffee concentrate and liquid concentrate of low-caffeine coffee)

As referred to herein, the term "liquid coffee concentrate" refers to a coffee-flavored liquid which is to be diluted to yield a beverage suitable for drinking (hereinafter also referred to simply as "diluted beverage"). As referred to above, the term "coffee-flavored liquid" refers to a liquid having an aroma reminiscent of coffee, and more specifically to a liquid containing a coffee flavor. The coffee flavor will be described later.

As referred to herein, the term "liquid concentrate of low-caffeine coffee" refers to a liquid coffee concentrate whose caffeine is reduced or removed, and more specifically to a coffee-flavored liquid which is to be diluted upon drinking, and which comprises caffeine at a concentration sufficient to yield a diluted beverage having a caffeine concentration of from 0.1 to 10 mg/100 g.

The dilution factor used to dilute the liquid concentrate of low-caffeine coffee of the present invention can be set, as appropriate, according to the preference of a person who drinks a diluted beverage, but is preferably set to be in the range of from 3 to 6 times on a volume ratio basis. To be specific, for example, the dilution by a factor of 3 times on a volume ratio basis means that one volume of a liquid concentrate of low-caffeine coffee is diluted with addition of two volumes of a dilution medium. All dilution factors as indicated herein are expressed on a volume ratio basis.

The present invention is based on the discovery that by using a liquid concentrate of low-caffeine coffee prepared by adjusting caffeine and acetic acid contents to be within the specified ranges, a beverage prepared by diluting the liquid concentrate of low-caffeine coffee can have an enhanced coffee taste. While the activity of acetic acid to enhance coffee tastes will be described later, acetic acid is capable of enhancing the tastes of caffeine present in small amounts. Therefore, it is necessary that the liquid concentrate of low-caffeine coffee of this invention comprises caffeine at a concentration sufficient to yield a diluted beverage having a caffeine concentration of at least 0.1 mg/100 g, and it is preferred from the viewpoint of reduction of caffeine content that the liquid concentrate of low-caffeine coffee of this invention comprises caffeine at a concentration sufficient to yield a diluted beverage having a caffeine concentration of from 0.1 to 10 mg/100 g. In order to ensure that the effect of this invention can be exhibited more effectively, it is preferred that the liquid concentrate of low-caffeine coffee of this invention comprises caffeine at a concentration sufficient to yield a diluted beverage having a caffeine concentration of from 0.3 to 8 mg/100 g, more preferably at a concentration sufficient to yield a diluted beverage having a caffeine concentration of from 0.5 to 6 mg/100 g, particularly preferably at a concentration sufficient to yield a diluted beverage having a caffeine concentration of from 0.8 to 3 mg/100 g. From another perspective, the liquid concentrate of low-caffeine coffee of this invention preferably has a ratio of caffeine concentration to coffee solids concentration (caffeine concentration/coffee solids concentration) of not more than 2×10⁻³, more preferably not more than 4×10⁻⁴. The coffee solids concentration will be described later.

The caffeine content in the liquid concentrate of low-caffeine coffee of the present invention can be calculated by multiplying the caffeine content in a diluted beverage by a dilution factor. For example, when the dilution factor used to dilute the liquid coffee concentrate is 4 times, the "liquid coffee concentrate comprising caffeine at a concentration sufficient to yield a diluted beverage having a caffeine concentration of from 0.1 to 10 mg/100 g" means a liquid coffee concentrate comprising caffeine at a concentration of from 0.4 to 40 mg/100 g. On this basis, it is preferred that the liquid concentrate of low-caffeine coffee of this invention, which is to be diluted by a factor of from 3 to 6 times to yield a beverage suitable for drinking, comprises caffeine at a concentration of from 0.3 to 60 mg/100 g, more preferably from 0.9 to 48 mg/100 g, still more preferably from 1.5 to 36 mg/100 g, yet more preferably from 2.4 to 18 mg/100 g.

The caffeine content in a liquid coffee concentrate, and the caffeine content in a diluted beverage can be measured by a known method using high-performance liquid chromatography (HPLC) or the like.

The method for adjusting the caffeine content in the liquid concentrate of low-caffeine coffee of the present invention to be within a desired range is not particularly limited. In order to achieve reduction of the caffeine content in a liquid coffee concentrate, a liquid coffee extract obtained from a source material composed of coffee beans whose caffeine is removed or reduced may be used, or caffeine may be removed or reduced from an obtained liquid coffee extract. Exemplary methods for removing or reducing caffeine include, but are not limited to: removal of caffeine from refined raw coffee beans; use of decaffeinated coffee beans produced by a plant breeding technique, genetic recombination or the like; selective removal of caffeine from raw coffee beans by immersion in a solvent such as an organic solvent, water, or supercritical fluid carbon dioxide; and adsorptive removal of caffeine from a liquid coffee extract using activated carbon and ion-exchange resins, etc. Such caffeine removal or reduction methods may be used alone or in combination.

Conversely, in order to adjust the caffeine content in the liquid concentrate of low-caffeine coffee to be within a desired range, the caffeine content may also be increasedin such a case, a caffeine preparation acceptable for use in foods and beverages may be added.

### (Acetic acid)

The liquid concentrate of low-caffeine coffee of the present invention is characterized in that the liquid concentrate of low-caffeine coffee prepared by adjusting caffeine and acetic acid contents to be within the specified ranges is diluted to yield a beverage having enhanced coffee tastes and having a rich *kokumi* taste and a bitter aftertaste comparable or superior to the aroma of a beverage prepared by diluting a liquid concentrate of non-decaffeinated coffee. Among different acid taste ingredients, acetic acid acts to specifically enhance the tastes of caffeine.

The acetic acid content in the liquid coffee concentrate of the present invention is adjusted to a concentration sufficient to yield a diluted beverage having an acetic acid concentration of not less than 1 mg/100 g, preferably not less than 2 mg/100 g, more preferably not less than 3 mg/100 g, still more preferably not less than 6 mg/100 g.

Acetic acid is known to be a volatile acid whose pungent acid odor adversely affects the aroma of coffee. With a view to enhancing the flavor of non-decaffeinated coffee beverages, various treatments have been proposed to reduce acetic acid from coffee beans (e.g., Japanese Unexamined Patent Application Publication No. JP 2011-97832, and Japanese Domestic Re-publication of PCT International Publication No. JPWO 2005-11396). In this invention, a specified amount of acetic acid is incorporated in a decaffeinated liquid concentrate of low-caffeine coffee. When the content of acetic acid added is too low, enhancement of the tastes of caffeine may not be achieved to the desired extent.

Enhancement of the tastes of caffeine becomes more prominent with the increase of the concentration of acetic acid. However, when the acetic acid concentration in a diluted beverage exceeds 25 mg/100 g, enhancement of the tastes of caffeine reaches the plateau, and moreover the odor and taste of acetic acid may interfere with the desired effects. Therefore, the upper limit of the acetic acid content in the liquid coffee concentrate of the present invention is preferably set to a concentration sufficient to yield a diluted beverage having an acetic acid concentration of not more than 25 mg/100 g, more preferably a concentration sufficient to yield a diluted beverage having an acetic acid concentration of not more than 20 mg/100 g, still more preferably a concentration sufficient to yield a diluted beverage having an acetic acid concentration of not more than 18 mg/100 g.

Similarly to the calculation of caffeine content, the acetic acid content in the liquid concentrate of low-caffeine coffee of the present invention can be calculated by multiplying the acetic acid content in a diluted beverage by a dilution factor. For example, when the dilution factor used to dilute the liquid coffee concentrate is 4 times, the "liquid coffee concentrate comprising acetic acid at a concentration sufficient to yield a diluted beverage having an acetic acid concentration of not less than 1 mg/100 g" means a liquid coffee concentrate comprising acetic acid at a concentration of not less than 4 mg/100 g. On this basis, it is preferred that the liquid concentrate of low-caffeine coffee of this invention, which is to be diluted by a factor of from 3 to 6 times to yield a beverage suitable for drinking, comprises acetic acid at a concentration of not less than 3 mg/100 g, more preferably not less than 6 mg/100 g, still more preferably not less than 9 mg/100 g, yet more preferably not less than 18 mg/100 g. Also, it is preferred that the liquid concentrate of low-caffeine coffee of this invention, which is to be diluted by a factor of from 3 to 6 times to yield a beverage suitable for drinking, comprises acetic acid at a concentration of not more than 150 mg/100 g, more preferably not more than 120 mg/100 g, still more preferably not more than 108 mg/100 g.

The acetic acid content in a liquid coffee concentrate, and the acetic acid content in a diluted beverage can be measured by a common organic acid analysis method using high-performance liquid chromatography (HPLC) or the like.

The concentration ratio of acetic acid (B) and caffeine (A) [(B)/(A)] in the liquid concentrate of low-caffeine coffee of the present invention is also important for achieving the desired effects. To be specific, the concentration ratio [(B)/(A)] is in the range of from 0.7 to 25, preferably from 1 to 20, more preferably from 3 to 15, particularly preferably from 5 to 15. In particular, in the liquid concentrate of low-caffeine coffee comprising caffeine at a concentration sufficient to yield a diluted beverage having a caffeine concentration of from 0.5 to 6 mg/100 g, the concentration ratio [(B)/(A)] is preferably adjusted to be in the range of from 0.7 to 25, from 1 to 20, from 3 to 15, or from 5 to 15.

The acetic acid used in the liquid concentrate of low-caffeine coffee of the present invention can be of any type as long as it is of a type that can be added to beverages and foods. The acetic acid may be a salt thereof. Also, a crude extract, an extract, or a purified extract obtained from a natural product containing acetic acid ingredients may be added to a liquid coffee concentrate.

### (Coffee flavor)

The liquid concentrate of low-caffeine coffee of the present invention comprises a coffee flavor. Exemplary coffee flavors used in this invention include coffee flavorings used as food additives that can be added to beverages, and roasted coffee bean extracts containing coffee aroma components (hereinafter also referred to as "liquid coffee extracts"). A liquid concentrate of low-caffeine coffee comprising a coffee flavor, wherein the coffee flavor comprises a coffee flavoring and a liquid coffee extract, is one of preferred embodiments of this invention.

The present inventors found that addition of a specific amount of acetic acid not only enhances the rich *kokumi* taste and bitter aftertaste of coffee, but also enhances a nut-like aroma. Therefore, when in the liquid concentrate of low-caffeine coffee of the present invention, the coffee flavor comprises a coffee flavoring, the coffee flavoring preferably comprises a nut-like aroma component. Examples of nut-like aroma components include different types of pyrazines, such as 2-ethyl-3,5-dimethylpyrazine, 2,3-diethyl-5-methylpyrazine, and 2,3,5-trimethylpyrazine. Among those pyrazines, 2,3,5-trimethylpyrazine is an advantageous aroma component since it has a nut-like aroma so that the effects of this invention can be prominently perceived.

The type of a coffee flavoring used in the present invention is not particularly limited, and any commercially available coffee flavoring can be used as appropriate without limitation. Some skilled artisans may use the following coffee-related terms differently: *i.e.,* use the term "fragrance" to refer to the aroma of roasted and ground coffee, the term "aroma" to refer to the aroma of a liquid coffee extract, and the term "flavor" to refer to the aroma perceived when liquid coffee is taken into the mouth. However, as used herein, the term "coffee flavoring" even covers flavorings having coffee fragrance and flavorings having coffee aroma.

When a coffee favoring is added to the liquid concentrate of low-caffeine coffee of the present invention, the amount of the coffee flavoring added can be set, as appropriate, in consideration of the titer of the flavoring used, the dilution factor used to dilute the liquid coffee concentrate, and the like. The amount of the coffee flavoring added is generally in the range of approximately from 0.01 to 5.0% by weight, preferably approximately from 0.03 to 4.0% by weight, more preferably approximately from 0.05 to 3.0% by weight, still more preferably approximately from 0.1 to 1.5% by weight, based on the amount of the liquid coffee concentrate.

In the liquid concentrate of low-caffeine coffee of the present invention, the coffee flavor may comprise a liquid coffee extract. As referred to herein, the term "liquid coffee extract" refers to a solution extracted from roasted and ground coffee beans with water, hot water or the like, and also covers a coffee essence obtained by concentrating a liquid coffee extract, and a solution adjusted to a proper volume by adding water, hot water or the like to a solid dry matter obtained by drying a liquid coffee extract.

The type of coffee beans used to make a liquid coffee extract is not particularly limited, and examples thereof include, but are not limited to, Blue Mountain, High Mountain, Jamaica, Crystal Mountain, Guatemala Antigua, Colombia Supremo, Mocha Harar, Mocha Mattari, Kilimanjaro, Toraja, Kalosi, Gayo Mountain, Mandheling, Brazil, and Hawaii Kona. Exemplary coffee bean species include, but are not limited to, *Arabica* and *Robusta.* One type of coffee beans may be used alone, or two or more types thereof may be blended and used.

Such raw coffee beans are roasted in a coffee roaster, and the thus-roasted coffee beans can be used as a source material to make a liquid coffee extract. The roasting can be carried out by, for example, introducing raw coffee beans into the interior of a rotary drum and heating the beans from the bottom of the drum with a gas burner or the like while stirring by rotating the drum. With regard to the degree of roasting of such coffee beans, the beans are roasted to an L-value of approximately from 14 to 30. Since the liquid concentrate of low-caffeine coffee of the present invention is intended for use to prepare a latte, it is preferred that the liquid concentrate should have a taste reminiscent of espresso. In general, coffee beans become stronger in bitterness and *kokumi* taste as they are roasted more deeply -- thus, deeply roasted coffee beans (with a L-value of approximately from 14 to 22, preferably approximately from 15 to 20) are generally used to make espresso. Similarly, in the liquid concentrate of low-caffeine coffee of this invention, deeply roasted coffee beans are preferably used as a source material to make a liquid coffee extract. As referred to above, the L-value is an indicator that reflects the degree of coffee roasting, and is a value of the brightness of a ground powder of roasted coffee beans as measured by a chronometer (0 represents black and 100 represent white).

The method for extracting a liquid coffee extract from roasted coffee beans is not limited at all. For example, roasted coffee beans are ground to coarse, medium or fine grind, and ground coffee beans are extracted with water or hot water (at 0 to 200°C) for a period of 10 seconds to 30 minutes. The extraction method can be selected, as appropriate, from known methods such as drip extraction, siphon extraction, boiling extraction, jet extraction, and continuous column extraction. For example, column extraction can be carried out by loading coffee beans into a column type extractor and supplying water or hot water to the extractor. In this method, multistep extraction may also be employed. As referred to above, the "multistep extraction" refers to an extraction process using an apparatus having independent extraction columns connected in series by pipings. The multistep extraction is an advantageous extraction process from the viewpoint of aroma, since in this process, a liquid extract having a high coffee solids content comparable to that of a liquid concentrate can be recovered without taking a concentration step.

It is acceptable that a liquid comprising such a coffee flavor as described above may be used as a liquid coffee concentrate serving as a base to make the liquid concentrate of low-caffeine coffee of the present invention (hereinafter also referred to as "liquid coffee concentrate base"), and that the caffeine concentration, the acetic acid concentration, and the concentration ratio of acetic acid (B) and caffeine (A) [(B)/(A)] in the liquid coffee concentrate base may be adjusted to be within the specified ranges, thereby to prepare the liquid concentrate of low-caffeine coffee of this invention.

In another instance, it is also acceptable that such a liquid coffee extract as described above may be used as a liquid coffee concentrate base as it is, and that the caffeine concentration, the acetic acid concentration, and the concentration ratio of acetic acid (B) and caffeine (A) [(B)/(A)] in the liquid coffee concentrate base may be adjusted to be within the specified ranges, thereby to prepare the liquid concentrate of low-caffeine coffee of the present invention.

In still another instance, it is also acceptable that such a liquid coffee extract as described above may be used as a liquid coffee concentrate base as it is, and that the caffeine concentration, the acetic acid concentration, and the concentration ratio of acetic acid (B) and caffeine (A) [(B)/(A)] in the liquid coffee concentrate base may be adjusted to be within the specified ranges, and a coffee flavoring may be further added as required, thereby to prepare the liquid concentrate of low-caffeine coffee of the present invention.

When the liquid concentrate of low-caffeine coffee of the present invention comprises a liquid coffee extract, it is preferred that the coffee solids concentration in the liquid coffee extract is adjusted to be in the range of from 5 to 12% by weight. Further, when the liquid concentrate of low-caffeine coffee of this invention comprises a liquid coffee extract, it is preferred that the liquid coffee extract is present in the liquid concentrate of low-caffeine coffee at a concentration sufficient to ensure that the coffee solids concentration in the liquid concentrate of low-caffeine coffee is in the range of from 5 to 12% by weight. A liquid coffee extract having a coffee solids concentration of from 5 to 12% by weight may be used as a liquid coffee concentrate base either as it is or as diluted to an appropriate volume, and may be made into a liquid concentrate of low-caffeine coffee having a coffee solids concentration of from 5 to 12% by weight.

As referred to herein, the term "coffee solids", as in e.g. such a liquid coffee extract as described above, refers to the weight (g) of soluble solids in the liquid coffee extract, which is determined from a sugar refractometer index (Brix) reading at 20°C. To be specific, the weight (g) of coffee solids in the liquid coffee extract is determined by measuring a sugar refractometer index (Brix) of the liquid coffee extract using a sugar refractometer (e.g., RX-5000 produced by Atago Co., Ltd.) and multiplying the Brix reading by the amount (g) of the liquid coffee extract used for measurement. As referred to herein, the term "coffee solids concentration" refers to a coffee solids concentration (% by weight) calculated based on the weight (g) of coffee solids determined by the above procedure. To be specific, the coffee solids concentration (% by weight) in a liquid coffee extract can be determined by calculating the percentage of the weight of coffee solids determined by the above procedure relative to the weight of the liquid coffee extract. Also, the coffee solids concentration in the liquid concentrate of low-caffeine coffee of the present invention can be determined by the same procedure as described above. Additionally, such a Brix value as described above may be used to refer to the coffee solids concentration in the liquid coffee extract or liquid coffee concentrate in this invention.

When the coffee solids concentration in the liquid concentrate of low-caffeine coffee of the present invention is not less than 5% by weight (preferably not less than 6% by weight), a beverage prepared by diluting the liquid concentrate with milk by a factor of from 3 to 6 times is more likely to have noticeable tastes inherent in coffee, and the rich *kokumi* taste and bitterness inherent in coffee can be enhanced more strongly by adding acetic acid in the amount specified above. It is preferred from the viewpoint of aroma that the upper limit of the coffee solids concentration in the liquid concentrate of low-caffeine coffee of this invention should be not more than 12% by weight, more preferably not more than 11% by weight, particularly preferably not more than 10% by weight.

### (Other components)

From the viewpoint that the effects of the present invention can be prominently exhibited, the liquid concentrate of low-caffeine coffee of the present invention preferably has a pH of from 5.0 to 7.0, more preferably from 5.0 to 6.0, still more preferably from 5.3 to 6.0. The pH adjustment can be made using a common pH adjustor such as sodium hydrogen carbonate or sodium hydroxide.

In addition to the components described above, other components may be added, as appropriate, to the extent that such other components do not impair the effects of this invention -- examples of such other components include, but are not limited to, sweeteners (*e.g*., sucrose, isomerized sugar, glucose, fructose, lactose, maltose, aspartame, acesulfame K, sucralose, and stevia), antioxidants (*e.g.,* sodium L-ascorbate), emulsifiers (*e.g.,* sucrose fatty acid esters, sorbitan fatty acid esters, polyglycerol fatty acid esters), acidulants, and flavorings.

### (Dilution medium)

Any type of dilution medium can be used to dilute the liquid concentrate of low-caffeine coffee of the present invention as long as such a dilution medium is a liquid acceptable for use in foods and beverages, with milk being preferably used as a dilution medium.

The liquid concentrate of low-caffeine coffee of the present invention is characterized in that the liquid concentrate of low-caffeine coffee prepared by adjusting caffeine and acetic acid contents to be within the specified ranges is diluted with a dilution medium to yield a beverage having enhanced coffee tastes and having a rich *kokumi* taste and a bitter aftertaste comparable or superior to the aroma of a beverage prepared by diluting a non-decaffeinated liquid coffee concentrate. Therefore, even when the liquid concentrate of low-caffeine coffee of this invention is mixed with plenty of milk, it is possible to prepare a beverage having a rich *kokumi* taste and a pronounced bitter taste (*esp.,* bitter aftertaste) of coffee, without being masked by milk. As described above, the liquid concentrate of low-caffeine coffee of this invention is advantageously used as a liquid concentrate which is to be diluted with milk. As referred to herein, the term "milk" refers to a white liquid containing fine colloidal particles of protein and fat that can mask the aroma of coffee if used as they are, and includes animal milks such as cow's milk, and vegetable milks such as soybean milk, almond milk, rice milk, and coconut milk.

### (Method for preparing a liquid concentrate of low-caffeine coffee)

In another aspect, the present invention is also directed to a method for preparing a liquid concentrate of low-caffeine coffee intended for use to prepare a beverage that has a reduced caffeine content but does not lose the inherent aroma of coffee, especially the rich *kokumi* taste and bitter aftertaste of coffee, and which makes one feel an authentic latter aroma.

To be specific, the present invention is directed to a method for preparing a liquid concentrate of low-caffeine coffee which is to be diluted by a factor of from 3 to 6 times to yield a beverage suitable for drinking, the method comprising the steps of:
(i) adding caffeine (A) at a concentration sufficient to yield a diluted beverage having a caffeine concentration of from 0.1 to 10 mg/100 g;
(ii) adding acetic acid (B) at a concentration sufficient to yield a diluted beverage having an acetic acid concentration of not less than 1 mg/100 g;
(iii) adjusting a concentration ratio of acetic acid (B) and caffeine (A) [(B)/(A)] to be within the range from 0.7 to 25; and
(iv) adding a coffee flavor.

### EXAMPLES

Hereunder, the present invention will be specifically described in detail by reference to experimental examples, but this invention is not limited to these examples. Unless otherwise stated herein, all numerical ranges are inclusive of their endpoints.

In working examples presented herein, the amounts of components in beverage samples were measured by following the procedures described below.

### <Measurement of caffeine concentration>

In order to quantify caffeine concentration, different samples were diluted by 10 times (w/w) with mobile phase A, filtered through a membrane filter (produced by Advantec Co., Ltd.; cellulose acetate type; pore size: 0.45 µm), and injected into HPLC. The HPLC measurement conditions are as follows.
- Column: TSK-gel ODS-80TsQA (4.6 mmϕ × 150 mm, produced by Tosoh Corporation)
- Mobile phase:
A: Watertrifluoroacetic acid = 1000:0.5
B: Acetonitrile:trifluoroacetic acid = 1000:0.5

- Flow rate: 1.0 mL/min
- Column temperature: 40°C
- Gradient conditions:

| | |
|---|---|
| 5 min. from the start of analysis: | Held at 100% solution A; |
| 5-10 min.: | Ramped down to 7.5% solution B; |
| 10-20 min.: | Ramped up to 10.5% solution B; |
| 20-32 min.: | Held at 10.5% solution B; |
| 32-45 min.: | Ramped up to 26.3% solution B; |
| 45-46 min.: | Ramped up to 75.0% solution B; |
| 46-51 min.: | Held at 75.0% solution B; |
| 51-52 min.: | Ramped down to 0% solution B; |
| 52-58 min.: | Held at 0% solution B. |

- Injection volume: 5.0 µL
- Detection wavelength: 280 nm
- Retention time: 19.3 min.
- Reference material: Caffeine (anhydrous) (produced by Nacalai Tesque, Inc.)

### <Measurement of acetic acid concentration>

In order to quantify acetic acid concentration, different samples were mixed with 0.5% perchloric acid, diluted with ion-exchange water to increase volume, filtered through a membrane filter (produced by Advantec Co., Ltd.; cellulose acetate type; pore size: 0.45 µm), and injected into HPLC. The HPLC measurement conditions are as follows.
- Model: LC-20AD (produced by Shimadzu Corporation)
- Detector: Electrical conductivity detector CDD-10AVP (produced by Shimadzu Corporation)
- Column: Shim-pack SCR-102H × 2, 8 mmϕ × 300 mm (produced by Hitachi Kasei Kyogyo K. K.)
- Mobile phase: An aqueous solution of 5 mmol/L p-toluenesulfonic acid
- Reaction solution: An aqueous solution obtained by diluting p-toluenesulfonic acid with water to yield a p-toluenesulfonic acid concentration of 5 mmol/L, and containing 20 mmol/L of Bis-Tris and 0.1 mmol/L of EDTA
- Flow rate: Mobile phase: 0.8 mL/min.; reaction solution: 0.8 mL/min.
- Column temperature: 45°C
- Injection volume: 10 µL

### [Experiment 1]

Different beverage samples prepared by diluting liquid concentrates of low-caffeine coffee with milk were investigated for the relationship between acetic acid concentration and the intensities of *kokumi,* bitterness and aroma.

First, liquid concentrate samples of low-caffeine coffee were prepared. A caffeine extract (produced by Shiratori Pharmaceutical Co., Ltd.) and a commercial coffee flavoring comprising pyrazines were added to ion-exchange water to give a liquid concentrate of low-caffeine coffee having such final concentrations of caffeine and coffee flavoring as indicated in the "Liquid concentrate" row of Table 1. Further, varied amounts of acetic acid powder (produced by Nippon Synthetic Chemical Industry Co., Ltd.) was added to prepare liquid concentrate samples of low-caffeine coffee having such different acetic acid concentrations as shown in the "Liquid concentrate" row of Table 1. When the pH fell below 5.0, the pH was adjusted to from 5.0 to 5.5 with sodium hydrogen carbonate. These liquid concentrate samples of low-caffeine coffee having different acetic acid concentrations were diluted with milk by five times (coffee-flavored liquid:milk = 1:4) to obtain different latte-flavored beverages having a caffeine concentration of 2 mg/100 g and a coffee solids concentration of 0%.

The obtained latte-flavored beverage samples were subjected to sensory evaluation by five trained professional panelists. With a sample prepared with no addition of acetic acid (sample No. 1-1) being used as a control, the samples were rated on whether they tasted close to latte, *i.e.,* a mixed beverage of espresso and milk. To be specific, the individual panelists on their own first evaluated the samples on the *kokumi* taste *(i.e.,* whether pronounced coffee richness was felt), bitterness *(i.e.,* whether pronounced coffee bitterness was felt), and aroma *(i.e.,* whether pronounced coffee aroma was felt) of coffee. Those samples evaluated by all the five panelists as being closer in flavor to latte than the control were rated as "o", those evaluated by 3 or 4 panelists as being closer in flavor to latte than the control were rated as "△", and those evaluated by 2 or less panelists as being closer in flavor to latte than the control (including those evaluated by all the panelists as being similar in flavor to the control) were rated as "×".

The results are shown in Table 1. When latte-flavored beverage samples prepared by 5-fold dilution with plenty of milk contained acetic acid at concentrations of not less than 1 mg/100 g, they were closer in flavor to latte, with the mellow and thick mouthfeel characteristic of milk, and the tastes (*kokumi* and bitterness) and aroma (*esp.,* nut-like aroma) of coffee being enhanced with an increase of acetic acid concentration.

**[Table 1]**

| | | Sample 1-1 | Sample 1-2 | Sample 1-3 | Sample 1-4 | Sample 1-5 | Sample 1-6 | Sample 1-7 | Sample 1-8 |
|---|---|---|---|---|---|---|---|---|---|
| Liquid concentrate | (A) Caffeine (mg/100g) | 10 | | | | | | | |
| | Coffee flavoring (g/100g) | 0.5 | | | | | | | |
| | (B) Acetic acid (mg/100g) | 0 | 2.5 | 5 | 7 | 10 | 55 | 100 | 200 |
| | (B)/(A) | 0 | 0.25 | 0.5 | 0.7 | 1 | 5.5 | 10 | 20 |
| Diluted beverage | Caffeine (mg/100g) | 2 | | | | | | | |
| | Coffee flavoring (g/100g) | 0.1 | | | | | | | |
| | Acetic acid (mg/100g) | 0 | 0.5 | 1 | 1.4 | 2 | 11 | 20 | 40 |
| Rating | *Kokumi* | - (Control) | × | Δ | ○ | ○ | ○ | ○ | ○ |
| | Bitterness | - (Control) | × | Δ | ○ | ○ | ○ | ○ | ○ |
| | Aroma | - (Control) | × | Δ | ○ | ○ | ○ | ○ | ○ |

### [Experiment 2]

Different beverage samples prepared by diluting liquid coffee concentrates with milk were investigated for the relationship between caffeine concentration and acetic acid concentration.

First, different liquid coffee concentrates were prepared by following the same procedure as in Experiment 1, except that caffeine was added to give such varied concentrations as indicated in the "Liquid concentrate" row of Tables 2-1 to 2-4. The prepared liquid coffee concentrates were diluted with milk by five times, and the diluted beverages were subjected to sensory evaluation by following the same procedure as in Experiment 1, with those acetic acid-free samples with different caffeine concentrations (sample Nos. 2-1, 2-4, 2-7, 2-10, 2-13, 2-16, 2-19, 2-22) being used as controls.

The results are shown in Table 2. In those diluted beverage samples with a caffeine concentration of less than 0.1 mg/100 g (sample Nos. 2-2, 2-3, 2-5, 2-6), no enhancement of coffee tastes and aroma by acetic acid was observed. Also, in those diluted beverage samples with a caffeine concentration exceeding 10 mg/100 g (sample Nos. 2-20, 2-21), no enhancement of coffee tastes and aroma by acetic acid was observed, since these samples had adequate coffee flavor even in the absence of acetic acid. These results revealed that in order that the effects of the present invention can be effectively exhibited, caffeine is required to be present at a concentration sufficient to yield a diluted beverage with a caffeine concentration of from 0.1 to 10 mg/100 g.

**[Table 2-1]**

| | | Sample 2-1 | Sample 2-2 | Sample 2-3 | Sample 2-4 | Sample 2-5 | Sample 2-6 |
|---|---|---|---|---|---|---|---|
| Liquid concentrate | (A) Caffeine (mg/100g) | 0 | | | 0.25 | | |
| | Coffee flavoring (g/100g) | 0.5 | | | 0.5 | | |
| | (B) Acetic acid (mg/100g) | 0 | 30 | 100 | 0 | 30 | 100 |
| | (B)/(A) | - | - | - | 0 | 120 | 400 |
| Diluted beverage | Caffeine (mg/100g) | 0 | | | 0.05 | | |
| | Coffee flavoring (g/100g) | 0.1 | | | 0.1 | | |
| | Acetic acid (mg/100g) | 0 | 6 | 20 | 0 | 6 | 20 |
| Rating | *Kokumi* | - (Control) | × | × | - (Control) | × | × |
| | Bitterness | - (Control) | × | × | - (Control) | × | × |
| | Aroma | - (Control) | × | × | - (Control) | × | × |

**[Table 2-2]**

| | | Sample 2-7 | Sample 2-8 | Sample 2-9 | Sample 2-10 | Sample 2-11 | Sample 2-12 |
|---|---|---|---|---|---|---|---|
| Liquid concentrate | (A) Caffeine (mg/100g) | 0.5 | | | 5 | | |
| | Coffee flavoring (g/100g) | 0.5 | | | 0.5 | | |
| | (B) Acetic acid (mg/100g) | 0 | 30 | 100 | 0 | 30 | 100 |
| | (B)/(A) | 0 | 60 | 200 | 0 | 6 | 20 |
| Diluted beverage | Caffeine (mg/100g) | 0.1 | | | 1 | | |
| | Coffee flavoring (g/100g) | 0.1 | | | 0.1 | | |
| | Acetic acid (mg/100g) | 0 | 6 | 20 | 0 | 6 | 20 |
| Rating | *Kokumi* | - (Control) | Δ | Δ | - (Control) | ○ | ○ |
| | Bitterness | - (Control) | Δ | Δ | - (Control) | ○ | ○ |
| | Aroma | - (Control) | Δ | ○ | - (Control) | ○ | ○ |

**[Table 2-3]**

| | | Sample 2-13 | Sample 2-14 | Sample 2-15 | Sample 2-16 | Sample 2-17 | Sample 2-18 |
|---|---|---|---|---|---|---|---|
| Liquid concentrate | (A) Caffeine (mg/100g) | 30 | | | 50 | | |
| | Coffee flavoring (g/100g) | 0.5 | | | 0.5 | | |
| | (B) Acetic acid (mg/100g) | 0 | 30 | 100 | 0 | 30 | 100 |
| | (B)/(A) | 0 | 1 | 3.3 | 0 | 0.6 | 2 |
| Diluted beverage | Caffeine (mg/100g) | 6 | | | 10 | | |
| | Coffee flavoring (g/100g) | 0.1 | | | 0.1 | | |
| | Acetic acid (mg/100g) | 0 | 6 | 20 | 0 | 6 | 20 |
| Rating | *Kokumi* | - (Control) | ○ | ○ | - (Control) | △ | △ |
| | Bitterness | - (Control) | ○ | ○ | - (Control) | △ | △ |
| | Aroma | - (Control) | ○ | ○ | - (Control) | △ | △ |

**[Table 2-4]**

| | | Sample 2-19 | Sample 2-20 | Sample 2-21 | Sample 2-22 | Sample 2-23 | Sample 2-24 |
|---|---|---|---|---|---|---|---|
| Liquid concentrate | (A) Caffeine (mg/100g) | 100 | | | 2.5 | | |
| | Coffee flavoring (g/100g) | 0.1 | | | 0.1 | | |
| | (B) Acetic acid (mg/100g) | 0 | 30 | 100 | 0 | 15 | 62.5 |
| | (B)/(A) | 0 | 0.3 | 1 | 0 | 6 | 25 |
| Diluted beverage | Caffeine (mg/100g) | 20 | | | 0.5 | | |
| | Coffee flavoring (g/100g) | 0.5 | | | 0.5 | | |
| | Acetic acid (mg/100g) | 0 | 6 | 20 | 0 | 3 | 12.5 |
| Rating | *Kokumi* | - (Control) | × | × | - (Control) | ○ | ○ |
| | Bitterness | - (Control) | × | × | - (Control) | ○ | ○ |
| | Aroma | - (Control) | × | × | - (Control) | ○ | ○ |

### [Experiment 3]

The effects of pH on the enhancement of caffeine tastes by acetic acid were investigated. Phosphoric acid and sodium hydrogen carbonate were added in appropriate amounts to sample No. 1-5 (pH 5.5) as prepared in Experiment 1 to give different liquid concentrate samples of low-caffeine coffee with different pH values of from 4.0 to 7.5. Different control samples with different pH values were also prepared with no addition of acetic acid. The liquid concentrate samples of low-caffeine coffee and control samples prepared above were diluted with milk by five times and subjected to sensory evaluation by following the same procedures as in Experiment 1.

Those liquid concentrate samples of low-caffeine coffee with a pH of less than 5.0 flocculated and aggregated when mixed with milk. In these samples, no pronounced enhancement of caffeine tastes was observed even with addition of acetic acid -- this is presumably because as aggregation progressed, coffee tastes and aroma became less perceivable. With regard to those liquid concentrate samples of low-caffeine coffee with a pH exceeding 7.0, the beverage samples prepared from those liquid concentrates were indistinct in overall tastes and less noticeable in coffee and milk tastes, and many of the panelists evaluated that no significant enhancement of caffeine tastes by addition of acetic acid was observed like in the case of those liquid concentrates of low-caffeine coffee with a pH of from 5.0 to 6.0 or from 5.3 to 6.0, although some of the panelists evaluated that these beverage samples had an enhanced coffee sensation.

### [Experiment 4]

Different beverage samples prepared by dilution with milk of liquid concentrates of low-caffeine coffee prepared from a mixture of a liquid coffee extract and a coffee flavoring were investigated for the relationship between acetic acid concentration and the intensities of *kokumi,* bitterness and aroma.

First, a liquid extract of low-caffeine coffee was prepared. To be specific, commercial roasted coffee beans (L-value ≈ 18) decaffeinated by supercritical fluid carbon dioxide extraction were employed and treated with steam by following the procedure disclosed in Example 3 of Japanese Domestic Re-publication of PCT International Publication No. JPWO 2005-11396, thereby to obtain decaffeinated, steamed and roasted coffee beans. The obtained roasted coffee beans were ground to medium grind, loaded into a multistage column extractor, and extracted in a multistep process with addition of hot water to obtain a liquid coffee extract with a Brix *(i.e.,* coffee solids concentration) of 12%. The obtained liquid coffee extract was diluted with water to give a liquid coffee extract with a coffee solids concentration of 5%. This liquid coffee extract with a coffee solids concentration of 5% was used as a liquid coffee concentrate base to make different liquid concentrates of low-caffeine coffee with a coffee solids concentration of 5%.

To be specific, the above prepared liquid coffee extract with a coffee solids concentration of 5%, acetic acid as used in Experiment 1, and a coffee flavoring comprising pyrazines (different from the one used in Experiment 1) were mixed according to the prescriptions shown in Table 3-1, and adjusted to pH 5.3 to 6.0 with sodium hydrogen carbonate to prepare different liquid concentrate samples of low-caffeine coffee (sample Nos. 4-1 to 4-7) containing the different components in such amounts as shown in the "Liquid concentrate" row of Table 3-1. In order to provide a control sample, 9 mg/100 g of caffeine and 0.3 g/100 g of the above coffee flavoring were added to ion-exchange water to prepare a control liquid concentrate sample of low-caffeine coffee which contained no liquid coffee extract but had the same caffeine and coffee flavoring concentrations. The liquid concentrate samples of low-caffeine coffee with different acetic acid concentrations, and the control liquid concentrate sample of low-caffeine coffee as prepared above were diluted with milk by four times (liquid coffee concentrate:milk = 1:3) to obtain different latte-flavored beverage samples.

Separately, the liquid coffee extract with a coffee solids concentration of 5% was mixed with 20 mg/100 g of caffeine used in Experiment 1 and further with the above coffee flavoring to prepare different liquid concentrate samples of high-caffeine coffee (sample Nos. 4-8 to 4-10) containing the different components in such amounts as shown in the "Liquid concentrate" row of Table 3-2. Further, as a control sample, a liquid concentrate of high-caffeine coffee containing no liquid coffee extract but having the same caffeine and coffee flavoring concentrations was prepared. The liquid concentrate samples of high-caffeine coffee with different acetic acid concentrations, and the control liquid concentrate sample of high-caffeine coffee as prepared above were diluted with milk by four times (liquid coffee concentrate:milk = 1:3) to obtain different latte-flavored beverage samples.

The above-prepared latte-flavored beverages were subjected to sensory evaluation in comparison with the control beverage samples with the same caffeine and coffee flavoring concentrations, by following the same procedure as in Experiment 1.

The results are shown in Tables 3-1 and 3-2. When the liquid concentrate samples of low-caffeine coffee containing caffeine at low concentrations sufficient to yield diluted beverages having a caffeine concentration within the range of from 1 to 10 mg/100 g (*e.g.,* 2.3 mg/100 mg) were adapted by adjusting the concentration of acetic acid (B) to a concentration sufficient to yield diluted beverages having an acetic acid (B) concentration of not less than 1 mg/100 g, and by adjusting the ratio of acetic acid (B) and caffeine (A) [(B)/(A)] to be within the range of from 0.7 to 11, the latte-flavored beverage samples prepared by diluting these liquid concentrate samples had noticeable and pronounced coffee richness and bitterness, and also had an aroma reminiscent of mellow coffee like espresso. From these results combined with the results in Table 2, it was found to be preferable to adjust the concentration ratio of acetic acid (B) and caffeine (A) [(B)/(A)] to be within the range of from 0.7 to 25.

**[Table 3-1]**

| | | Sample 4-1 | Sample 4-2 | Sample 4-3 | Sample 4-4 | Sample 4-5 | Sample 4-6 | Sample 4-7 |
|---|---|---|---|---|---|---|---|---|
| Amount added | Caffeine (mg/100g) | 0 | | | | | | |
| | Acetic acid (mg/100g) | 0 | 2.5 | 5 | 10 | 50 | 70 | 100 |
| | Coffee flavoring (g/100g) | 0.3 | | | | | | |
| Liquid concentrate | (A) Caffeine (mg/100g) | 9 | | | | | | |
| | (B) Acetic acid (mg/100g) | 0.6 | 3.1 | 5.6 | 10.6 | 50.6 | 70.6 | 100.6 |
| | (B)/(A) | 0.07 | 0.3 | 0.6 | 1.2 | 5.6 | 7.8 | 11.2 |
| Diluted beverage | Caffeine (mg/100g) | 2.3 | | | | | | |
| | Coffee flavoring (g/100g) | 0.075 | | | | | | |
| | Acetic add (mg/100g) | 0.15 | 0.8 | 1.4 | 2.7 | 12.7 | 17.7 | 25.2 |
| Rating | *Kokumi* | × | Δ | Δ | ○ | ○ | ○ | ○ |
| | Bitterness | × | Δ | Δ | ○ | ○ | ○ | ○ |
| | Aroma | × | × | Δ | ○ | ○ | ○ | Δ |

**[Table 3-2]**

| | | Sample 4-8 | Sample 4-9 | Sample 4-10 |
|---|---|---|---|---|
| Amount added | Caffeine (mg/100g) | 20 | | |
| | Acetic acid (mg/100g) | 0 | 10 | 20 |
| | Coffee flavoring (g/100g) | 0.3 | | |
| Liquid concentrate | (A) Caffeine (mg/100g) | 29 | | |
| | (B) Acetic acid (mg/100g) | 0.6 | 10.6 | 20.6 |
| | (B)/(A) | 0.02 | 0.4 | 0.7 |
| Diluted beverage | Caffeine (mg/100g) | 7.25 | | |
| | Coffee flavoring (g/100g) | 0.075 | | |
| | Acetic acid (mg/100g) | 0.15 | 2.7 | 5.2 |
| Rating | *Kokumi* | × | Δ | ○ |
| | Bitterness | × | Δ | ○ |
| | Aroma | × | × | ○ |

### [Experiment 5]

The liquid coffee extract with a coffee solids concentration of 12% as prepared in Experiment 4 was employed and mixed with proper amounts of water to give different liquid coffee extracts with different coffee solids concentrations of 2%, 9% and 12%. These liquid coffee extracts with coffee solids concentrations of 2%, 9% and 12% were respectively used as liquid coffee concentrate bases to make different liquid concentrates of low-caffeine coffee with coffee solids concentrations of 2%, 9% and 12%. To be specific, by following the same procedure as in Experiment 4, these liquid coffee extracts with different coffee solids concentrations were mixed with a coffee flavoring and varied concentrations of acetic acid according to the prescriptions indicated in Tables 4-1 and 4-2, whereby different liquid concentrates of low-caffeine coffee with different coffee solids and acetic acid concentrations were obtained. The obtained liquid concentrates were diluted with milk by four times, and subjected to sensory evaluation by following the same procedure as in Experiment 1.

The results are shown in Tables 4-1 and 4-2. When the liquid coffee concentrate samples containing caffeine derived from a liquid coffee extract at low concentrations sufficient to yield diluted beverages having a caffeine concentration of from 1 to 10 mg/100 g were adapted by adjusting the concentration of acetic acid (B) to a concentration sufficient to yield diluted beverages having an acetic acid (B) concentration of not less than 1 mg/100 g, and by adjusting the ratio of acetic acid (B) and caffeine (A) [(B)/(A)] to be within the range of from 0.7 to 25, especially from 3 to 15, the latte-flavored beverage samples prepared from these liquid concentrate samples had noticeable and pronounced coffee richness and bitterness, and also had an aroma reminiscent of mellow coffee like espresso.

FIG. 1 depicts a diagram that summarizes the results in Experiments 4 and 5. In this figure, the filled circles "●" represent beverages evaluated by the professional panelists as having particularly noticeable coffee richness and bitterness. The panelists evaluated that these latte-flavored beverages gave a long coffee aftertaste after swallowing, and left pleasant coffee *kokumi* and bitter tastes that lingered in the mouth for a long time.

**[Table 4-1]**

| | | Sample 5-1 | Sample 5-2 | Sample 5-3 | Sample 5-4 | Sample 5-5 | Sample 5-6 | Sample 5-7 |
|---|---|---|---|---|---|---|---|---|
| Coffee solids concentration in liquid coffee concentrate (% by weight) | | 2 | | | 9 | | | |
| Amount added | Acetic acid (mg/100g) | 0 | 10 | 50 | 0 | 10 | 50 | 100 |
| | Coffee flavoring (g/100g) | 0.3 | | | | | | |
| Liquid concentrate | (A) Caffeine (mg/100g) | 3.6 | | | 16.2 | | | |
| | (B) Acetic acid (mg/100g) | 0.24 | 10.2 | 50.2 | 1.1 | 11.1 | 51.1 | 101.1 |
| | (B)/(A) | 0.07 | 2.8 | 14 | 0.07 | 0.7 | 3.2 | 6.2 |
| Diluted beverage | Caffeine (mg/100g) | 0.9 | | | 4.1 | | | |
| | Coffee flavoring (g/100g) | 0.075 | | | 0.075 | | | |
| | Acetic acid (mg/100g) | 0.06 | 2.6 | 12.6 | 0.3 | 2.8 | 12.8 | 25.3 |
| Rating | *Kokumi* | × | ○ | ○ | × | ○ | ○ | ○ |
| | Bitterness | × | ○ | ○ | × | ○ | ○ | ○ |
| | Aroma | × | ○ | ○ | × | ○ | ○ | ○ |

**[Table 4-2]**

| | | Sample 5-8 | Sample 5-9 | Sample 5-10 | Sample 5-11 |
|---|---|---|---|---|---|
| Coffee solids concentration in liquid coffee concentrate (% by weight) | | 12 | | | |
| Amount added | Acetic acid (mg/100g) | 0 | 10 | 50 | 80 |
| | Coffee flavoring (g/100g) | 0.3 | | | |
| Liquid concentrate | (A) Caffeine (mg/100g) | 21.6 | | | |
| | (B) Acetic acid (mg/100g) | 1.4 | 11.4 | 51.4 | 81.4 |
| | (B)/(A) | 0.07 | 0.5 | 2.4 | 3.8 |
| Diluted beverage | Caffeine (mg/100g) | 5.4 | | | |
| | Coffee flavoring (g/100g) | 0.075 | | | |
| | Acetic add (mg/100g) | 0.4 | 2.9 | 12.9 | 20.4 |
| Rating | *Kokumi* | × | Δ | ○ | ○ |
| | Bitterness | × | Δ | ○ | ○ |
| | Aroma | × | Δ | ○ | ○ |

## Claims

1. A liquid concentrate of low-caffeine coffee which is to be diluted by a factor of from 3 to 6 times to yield a beverage suitable for drinking, wherein the liquid concentrate satisfies the following requirements (i) to (iv):
(i) the liquid concentrate comprises caffeine (A) at a concentration sufficient to yield a diluted beverage having a caffeine concentration of from 0.1 to 10 mg/100 g;
(ii) the liquid concentrate comprises acetic acid (B) at a concentration sufficient to yield a diluted beverage having an acetic acid concentration of not less than 1 mg/100 g;
(iii) the liquid concentrate having a concentration ratio of acetic acid (B) and caffeine (A) [(B)/(A)] of from 0.7 to 25;
(iv) the liquid concentrate comprising a coffee flavor.

2. The liquid concentrate of low-caffeine coffee according to claim 1, further comprising a coffee extract, wherein the liquid concentrate has a coffee solids concentration of from 5 to 12% by weight.

3. The liquid concentrate of low-caffeine coffee according to claim 1 or 2, wherein the liquid concentrate has a pH of from 5.0 to 7.0.

4. The liquid concentrate of low-caffeine coffee according to any one of claims 1-3, wherein the liquid concentrate is intended to be diluted with milk.

5. A method for preparing a liquid concentrate of low-caffeine coffee which is to be diluted by a factor of from 3 to 6 times to yield a beverage suitable for drinking, the method comprising the steps of:
(i) adding caffeine (A) at a concentration sufficient to yield a diluted beverage having a caffeine concentration of from 0.1 to 10 mg/100 g;
(ii) adding acetic acid (B) at a concentration sufficient to yield a diluted beverage having an acetic acid concentration of not less than 1 mg/100 g;
(iii) adjusting a concentration ratio of acetic acid (B) and caffeine (A) [(B)/(A)] to be within the range from 0.7 to 25; and
(iv) adding a coffee flavor.

## Patentansprüche

1. Ein flüssiges Kaffeekonzentrat mit geringem Koffeingehalt, das um einen Faktor von dem 3- bis 6-Fachen verdünnt werden soll, um ein zum Trinken geeignetes Getränk zu ergeben, wobei das flüssige Konzentrat die folgenden Anforderungen (i) bis (iv) erfüllt:
(i) das flüssige Konzentrat umfasst Koffein (A) in einer Konzentration, die ausreicht, um ein verdünntes Getränk mit einer Koffeinkonzentration von 0,1 bis 10 mg/100 g zu ergeben;
(ii) das flüssige Konzentrat umfasst Essigsäure (B) in einer Konzentration, die ausreicht, um ein verdünntes Getränk mit einer Essigsäurekonzentration von nicht weniger als 1 mg/100 g zu ergeben;
(iii) das flüssige Konzentrat weist ein Konzentrationsverhältnis von Essigsäure (B) und Koffein (A) [(B)/(A)] von 0,7 bis 25 auf;
(iv) das flüssige Konzentrat umfasst ein Kaffeearoma.

2. Das flüssige Kaffeekonzentrat mit geringem Koffeingehalt nach Anspruch 1, das ferner einen Kaffeeextrakt umfasst, wobei das flüssige Konzentrat eine Kaffeefeststoffkonzentration von 5 bis 12 Gew.-% aufweist.

3. Das flüssige Kaffeekonzentrat mit geringem Koffeingehalt nach Anspruch 1 oder 2, wobei das flüssige Konzentrat einen pH von 5,0 bis 7,0 aufweist.

4. Das flüssige Kaffeekonzentrat mit geringem Koffeingehalt nach einem der Ansprüche 1-3, wobei das flüssige Konzentrat dazu bestimmt ist, mit Milch verdünnt zu werden.

5. Ein Verfahren zur Herstellung eines flüssigen Kaffeekonzentrats mit niedrigem Koffeingehalt, das um einen Faktor von dem 3- bis 6-Fachen verdünnt werden soll, um ein zum Trinken geeignetes Getränk zu ergeben, wobei das Verfahren die Schritte umfasst:
(i) Zugabe von Koffein (A) in einer Konzentration, die ausreicht, um ein verdünntes Getränk mit einer Koffeinkonzentration von 0,1 bis 10 mg/100 g zu ergeben;
(ii) Zugabe von Essigsäure (B) in einer Konzentration, die ausreicht, um ein verdünntes Getränk mit einer Essigsäurekonzentration von nicht weniger als 1 mg/100 g zu ergeben;
(iii) Einstellen eines Konzentrationsverhältnisses von Essigsäure (B) und Koffein (A) [(B)/(A)] auf einen Wert im Bereich von 0,7 bis 25; und
(iv) Hinzufügen eines Kaffeearomas.

## Revendications

1. Concentré liquide de café à faible teneur en caféine qui doit être dilué par un facteur de 3 à 6 fois pour donner une boisson adaptée pour la consommation, où le concentré liquide satisfait aux exigences suivantes (i) à (iv) :
(i) le concentré liquide comprend de la caféine (A) en une concentration suffisante pour donner une boisson diluée ayant une concentration en caféine allant de 0,1 à 10 mg/100 g ;
(ii) le concentré liquide comprend de l'acide acétique (B) en une concentration suffisante pour donner une boisson diluée ayant une concentration en acide acétique qui n'est pas inférieure à 1 mg/100 g ;
(iii) le concentré liquide ayant un rapport de concentration d'acide acétique (B) et de caféine (A) [(B)/(A)] allant de 0,7 à 25 ;
(iv) le concentré liquide comprenant un arôme café.

2. Concentré liquide de café à faible teneur en caféine selon la revendication 1, comprenant en outre un extrait de café, où le concentré liquide a une concentration en matières solides de café allant de 5 à 12 % en poids.

3. Concentré liquide de café à faible teneur en caféine selon la revendication 1 ou 2, où le concentré liquide a un pH allant de 5,0 à 7,0.

4. Concentré liquide de café à faible teneur en caféine selon l'une quelconque des revendications 1 à 3, où le concentré liquide est destiné à être dilué avec du lait.

5. Méthode de préparation d'un concentré liquide de café à faible teneur en caféine qui doit être dilué par un facteur de 3 à 6 fois pour donner une boisson adaptée pour la consommation, la méthode comprenant les étapes de :
(i) ajout de caféine (A) en une concentration suffisante pour donner une boisson diluée ayant une concentration en caféine allant de 0,1 à 10 mg/100 g ;
(ii) ajout d'acide acétique (B) en une concentration suffisante pour donner une boisson diluée ayant une concentration en acide acétique qui n'est pas inférieure à 1 mg/100 g ;
(iii) ajustement d'un rapport de concentration d'acide acétique (B) et de caféine (A) [(B)/(A)] pour qu'il soit dans la plage allant de 0,7 à 25 ; et
(iv) ajout d'un arôme café.
